# EUROPÄISCHE PATENTSCHRIFT

(11) **EP 0 992 044 B1**
(45) Veröffentlichungstag und Bekanntmachung des Hinweises auf die Patenterteilung: **14.11.2001**
(21) Anmeldenummer: 98933458.6
(22) Anmeldetag: 05.05.1998
(51) Int. Cl.: H01G 2/04

(54) **ALUMINIUM-ELEKTROLYTKONDENSATOR**
ALUMINIUM ELECTROLYTE CAPACITOR
CONDENSATEUR ELECTROCHIMIQUE EN ALUMINIUM

(30) Priorität: 18.06.1997 DE 19725844
(43) Veröffentlichungstag der Anmeldung: 12.04.2000
(73) Patentinhaber: EPCOS AG, 81541 München (DE)
(72) Erfinder: SCHWEIKERT, Wilhelm, D-89522 Heidenheim (DE)
(74) Vertreter: Epping, Wilhelm, Dipl.-Ing.
(86) Internationale Anmeldenummer: DE9801256
(87) Internationale Veröffentlichungsnummer: WO9858395

(56) Entgegenhaltungen:
- EP-A- 0 450 122

## Beschreibung

Die Erfindung betrifft einen Aluminium-Elektrolytkondensator, der in ein Gehäuse eingebaut ist, das durch eine Abschlußscheibe verschlossen ist, bei dem in der Abschlußscheibe zwei metallische Anschlußelemente für die Kondensatoranschlüsse angeordnet sind.

Ein derartiger Kondensator ist beispielsweise dem Siemens Matsushita Components Datenbuch 1997 "Aluminium-Elektrolytkondensatoren", Seiten 62 - 68, bekannt.

Dort besitzen die Anschlußelemente ein Innengewinde, wobei die Befestigung der Leitungen beziehungsweise Stromschienen mittels Schrauben oder Gewindestiften erfolgt. Das anodenseitige Anschlußelement in der Abschlußscheibe besteht dabei aus Reinaluminium (A1 99,5 und reiner), da es im Inneren des Kondensators mit Elektrolyt benetzt ist und eine sperrfähige Oxidschicht gebildet werden muß. Die geringe Festigkeit des weichen Reinaluminiums läßt nur geringe Anzugsdrehmomente bei der Befestigung der elektrischen Anschlüsse zu, was oft zur Beschädigung des Gewindes bei der Montage führt. Weiterhin sind auch sich wieder lösende Verbindungen bei mechanischer Beanspruchung mit der Folge mangelhaften Kontakts keine Seltenheit.

Zusätzlich zu den oben beschriebenen Schwierigkeiten ist bei der Verschaltung mehrerer Kondensatoren zu Batterien die Längentoleranz der Bauelemente ein großes Problem. Zur guten Ableitung der Verlustwärme soll der Becherboden des Kondensators fest auf die Montageplatte gepreßt werden. Andererseits werden die zur Verschaltung dienenden Elemente wegen der zunehmenden Strombelastung immer massiver und unflexibler. Das macht spezielle Längenausgleichselemente oder kompliziert gestaltete Verschaltungselemente notwendig. Die zur Verschaltung verwendeten Platten sitzen meistens auf der oberen Ebene der Schraubanschlüsse, was zu einer erhöhten Induktivität zwischen den Schraubanschlüssen der Anschlußelemente führt.

Es ist zwar möglich, dem Problem der geringen Anzugsfestigkeiten mit größeren Anschlußgewinden gegenzusteuern, was aber wiederum deutlich höhere Kosten der Abschlußscheibe zur Folge hat. Der Längenausgleich mit Ausgleichselementen oder mit mehr oder weniger flexiblen Anschlußelementen führt meistens zu unbefriedigenden Kompromissen im Bezug auf die Wärmeableitung und Induktivität, so daß die konstruktiven Gestaltungsmöglichkeiten bei der Verschaltung stark eingeschränkt sind.

Aufgabe der vorliegenden Erfindung ist es, den eingangs genannten Aluminium-Elektrolytkondensator derart weiterzubilden, daß eine problemlose Befestigung bei gleichzeitigem Ausgleich der Längentoleranz der Bauelemente und eine möglichst niedrige Induktivität gewährleistet sind.

Diese Aufgabe wird erfindungsgemäß dadurch gelöst, daß die Anschlußelemente massiv ausgebildet sind, und daß die Anschlußelemente mittels einer radial wirkenden Klemmverbindung mit äußeren Anschlüssen verbunden sind.

Vorteilhafte Weiterbildungen sind Gegenstand von Unteransprüchen.

Die Erfindung wird anhand von Ausführungsbeispielen näher erläutert.

In der dazugehörenden Zeichnung zeigen
- Figur 1: eine Aufsicht und
- Figur 2: eine Seitenansicht des Elektrolytkondensators nach der Erfindung.

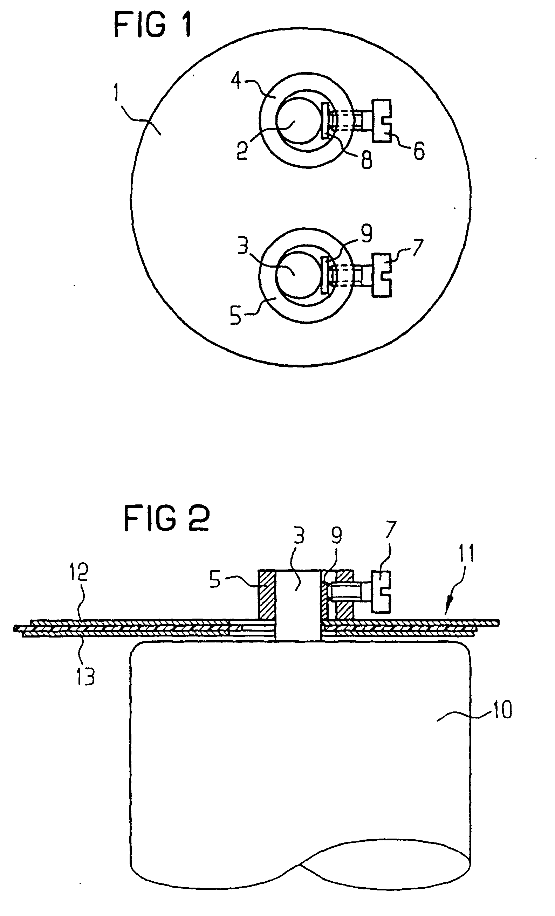

In der Figur 1 ist eine Abschlußscheibe 1 dargestellt, die aus einem isolierenden Material besteht. In der Abschlußscheibe 1, die als Verschluß des in der Figur nicht dargestellten Kondensatorbechers dient, sind zwei Anschlußelemente 2, 3 angeordnet, an denen auf der Innenseite die Anode bzw. Kathode des Kondensators befestigt sind.

Die Anschlußelemente 2, 3 sind massiv, das heißt gewindelos ausgeführt. Zum Anschluß der äußeren Anschlüsse dienen Klemmverbindungen 4, 5, in denen Schrauben 6, 7 angeordnet sind, die die Klemmvorrichtung 4, 5 fest mit den Anschlußelementen 2, 3 verbinden. Dabei befindet sich zwischen den Schrauben 6, 7 und den Anschlußelementen 2, 3 der Anschlußlappen 8, 9 eine sogenannte "Sandwich-Platine", die in Figur 2 dargestellt ist.

In Figur 2 ist der Kondensator 10 in Seitenansicht zu sehen. Das Anschlußelement 3 ist mittels der Klemmverbindung 5 und der Schraube 7 mit dem Anschlußlappen 9 und der oberen Leiterbahn 12 der Sandwich-Platine 11 verbunden. Die untere Leiterbahn 13 ist mit dem in der Figur 2 nicht sichtbaren Anschlußelement 4 verbunden.

Der Kondensator nach der Erfindung weist somit die Vorteile auf, daß das Anschlußelement 2, 3 aus beliebigem hochfestem Material bestehen kann, so daß das Anzugsmoment vielfach höher ausgelegt werden und damit den im Montagebau üblichen Kriterien entsprechen kann. Ein Längenausgleich des Kondensatorgehäuses erfolgt zwangsweise, da kein axialer Anschluß mehr vorliegt, sondern die Klemmverbindungen 4, 5 radial angeschlossen werden. Weiterhin können die Anschlußplatinen 11 auf die Höhe der Kondensatorabschlußscheibe 3 abgesenkt werden, was die Verschaltungsinduktivität wesentlich verringert.

Durch die geschilderten Maßnahmen werden die Anschlußelemente 2, 3 zudem einfacher und kleiner, wodurch die Herstellungskosten deutlich verringert werden können.

Die in den Figuren als rund dargestellten Anschlußelemente 2, 3 können auch flächig, zum Beispiel als Vier- oder Sechskant ausgeführt werden.

Weiterhin ist es auch möglich, den Kondensator 10 für eine liegende Montage auf Leiterplatten mit entsprechend gestaltetem Auflager zu verwenden.

## Patentansprüche

1. Aluminium-Elektrolytkondensator, der in ein Gehäuse eingebaut ist, das durch eine Abschlußscheibe verschlossen ist, und bei dem in der Abschlußscheibe zwei metallische Anschlußelemente für die Kondensatoranschlüsse angeordnet sind,
**dadurch gekennzeichnet,**
**daß** die Anschlußelemente (2, 3) massiv ausgebildet sind, und
**daß** die Anschlußelemente (2, 3) mittels einer radial wirkenden Klemmverbindung (4, 5) mit äußeren Anschlüssen (8, 9) verbunden sind.

2. Aluminium-Elektrolytkondensator nach Anspruch 1,
**dadurch gekennzeichnet,**
**daß** er mit mehreren anderen Aluminium-Elektrolytkondensatoren zu einer Kondensatorbatterie verschaltet ist, und daß die äußeren Anschlüsse (12, 13) durch eine Sandwich-Platine (11) gebildet sind.

3. Aluminium-Elektrolytkondensator nach Anspruch 1 oder 2,
**dadurch gekennzeichnet,**
**daß** der Querschnitt der Anschlußelemente (2, 3) rund ausgebildet ist.

4. Aluminium-Elektrolytkondensator nach Anspruch 1 oder 2,
**dadurch gekennzeichnet,**
**daß** der Querschnitt der Anschlußelemente (2, 3) flächig, z. B. als Vier- bzw. Sechskant ausgebildet ist.

## Claims

1. Aluminium electrolytic capacitor, which is installed in a casing which is closed by a cover disc, and in which two metallic connecting elements for the capacitor connections are arranged in the cover disc,
**characterized**
**in that** the connecting elements (2, 3) are designed to be solid, and in that the connecting elements (2, 3) are connected to external connections (8, 9) by means of a radially acting clamping connection (4, 5).

2. Aluminium electrolytic capacitor according to Claim 1,
**characterized**
**in that** said capacitor is connected to a plurality of other aluminium electrolytic capacitors to form a capacitor bank, and in that the external connections (12, 13) are formed by a sandwich board (11).

3. Aluminium electrolytic capacitor according to Claim 1 or 2,
**characterized**
**in that** the cross section of the connecting elements (2, 3) is designed to be round.

4. Aluminium electrolytic capacitor according to Claim 1 or 2,
**characterized**
**in that** the cross section of the connecting elements (2, 3) has planar surfaces, for example is designed to be quadrilateral or hexagonal.

## Revendications

1. Condensateur électrochimique en aluminium, qui est logé dans un godet fermé par un disque de fermeture et dans lequel il est monté dans le disque de fermeture deux éléments métalliques de raccordement pour les bornes du condensateur,
**caractérisé**
**en ce que** les éléments (2,3) de raccordement sont pleins et en ce que les éléments (2,3) de raccordement sont reliés à des bornes (8,9) extérieures au moyen d'une liaison (4,5) de blocage à effet radial.

2. Condensateur électrochimique à l'aluminium suivant la revendication 1,
**caractérisé**
**en ce qu'**il est monté avec plusieurs autres condensateurs électrochimiques à l'aluminium en une batterie de condensateurs et en ce que les bornes (12,13) extérieures sont formées par une platine (11) sandwich.

3. Condensateur électrochimique à l'aluminium suivant la revendication 1 ou 2,
**caractérisé**
**en ce que** la section transversale des éléments (2,3) de raccordement est circulaire.

4. Condensateur électrochimique à l'aluminium suivant la revendication 1 ou 2, **caractérisé en ce que** la section transversale des éléments (2,3) de raccordement est plate en étant constituée par exemple d'un quatre pans ou d'un six pans.
